# EUROPÄISCHE PATENTSCHRIFT

(11) **EP 1 916 749 B1**
(45) Veröffentlichungstag und Bekanntmachung des Hinweises auf die Patenterteilung: **23.02.2011**
(21) Anmeldenummer: 06023067.9
(22) Anmeldetag: 06.11.2006
(51) Int. Cl.: H02G 3/04

(54) **Medienversorgungsvorrichtung**
Media supply device
Dispositif d'alimentation en médium

(30) Priorität: 23.10.2006 DE 102006049834
(43) Veröffentlichungstag der Anmeldung: 30.04.2008
(73) Patentinhaber: Waldner Labor- und Schuleinrichtungen GmbH, 01097 Dresden (DE)
(72) Erfinder: Keibach, Dieter, 88267 Vogt (DE)
(74) Vertreter: Kilian, Helmut

(56) Entgegenhaltungen:
- DE-A1- 4 430 533
- DE-A1- 19 905 336
- DE-U1- 8 304 407
- DE-U1-202005 009 606
- FR-A- 2 834 139
- US-A1- 2007 123 075

## Beschreibung

Die Erfindung betrifft eine Medienversorgungsvorrichtung zur Medienversorgung wenigstens eines Arbeitsplatzes in einem Arbeitsraum, insbesondere einem Unterrichtsraum, mit wenigstens einem Medienverteiler, der an der Raumrohdecke anbringbar ist und mit gebäudeseitigen Medienzuführungen verbindbar ist, und mit wenigstens einem Medienversorgungselement für den Arbeitsplatz, das mit dem Medienverteiler verbunden ist, wobei das Medienversorgungselement über eine Führungsschiene horizontal verschiebbar mit dem Medienverteiler verbunden ist.

Eine solche Medienversorgungsvorrichtung gemäß dem Oberbegriff von Anspruch 1 ist beispielsweise aus der DE 199 05 336 A1 bekannt.

Eine derartige Medienversorgungsvorrichtung dient zur Bereitstellung von Medien an Arbeitsplätzen in einem Arbeitsraum, wobei der wenigstens eine Medienverteiler, der an der Raumrohdecke anbringbar ist, beispielsweise an der Raumrohdecke abgehängt oder in einer ihrerseits abgehängten Decke integriert sein kann.

Aus der DE 101 07 912 B4, der DE 201 22 040 U1 sowie der EP 1 685 904 A1 sind Medienversorgungsvorrichtungen bekannt, die in Form eines Deckenkanals ausgebildete Medienverteiler aufweisen, an denen Säulen befestigt sind, die Medienanschlüsse aufweisen, an die Leitungen angeschlossen werden können, die zum Arbeitsplatz führen. Die Säulen sind dabei an dem Medienverteiler entweder so befestigt, dass sie über wenigstens eine horizontale Achse aus einer waagrechten Ruhestellung in eine senkrechte Gebrauchsstellung geschwenkt werden können, oder an dem Medienverteiler fest angebracht und mit diesem aus einer Ruheposition in eine Gebrauchsposition vertikal verfahrbar.

Die bekannten Ausgestaltungen haben den Nachteil, dass die Arbeitsplatzanordnung, d. h. die Position der Arbeitstische immer so gestaltet sein muss, dass die Arbeitsplätze, d. h. die Arbeitstische sich unterhalb der Medienanschlüsse in der Gebrauchsstellung der Säulen befinden, um die Fluchtwege im Havariefall freizuhalten. Die Variabilität der Arbeitsplatzanordnung ist dadurch eingeschränkt.

Die bekannten Vorrichtungen weisen darüber hinaus Hilfsmittel zur Bereitstellung der Medien auf, die einen hohen technischen Aufwand erfordern.

Die der Erfindung zugrunde liegende Aufgabe besteht daher darin, eine Medienversorgungsvorrichtung der eingangs genannten Art zu schaffen, die einfach aufgebaut ist und unabhängig von der Gebrauchsstellung auf eine variable Arbeitsplatzanordnung einstellbar ist und gleichzeitig eine erhöhte Sicherheit für Benutzer bietet. Hierdurch soll eine vollständig variable Positionierung der Arbeitsplätze, d.h. der Arbeitstische, möglich sein.

Die erfindungsgemäße Medienversorgungsvorrichtung soll dabei ohne mechanische, elektronische und pneumatische Hilfsmittel in ihre Gebrauchsstellung gebracht werden können.

Diese Aufgabe wird gemäß der Erfindung durch die im Patentanspruch 1 angegebene Medienversorgungsvorrichtung gelöst.

Besonders bevorzugte Ausführungsbeispiele der erfindungsgemäßen Medienversorgungsvorrichtung sind Gegenstand der abhängigen Ansprüche.

Im Folgenden werden anhand der zugehörigen Zeichnungen besonders bevorzugte Ausführungsbeispiele der Erfindung näher beschrieben. Es zeigen
Fig. 1 in einer Draufsicht ein Ausführungsbeispiel der erfindungsgemäßen Medienversorgungsvorrichtung in einem Arbeitsraum,
Fig. 2 in einer Draufsicht ein weiteres Ausführungsbeispiel der erfindungsgemäßen Medienversorgungsvorrichtung in einem Arbeitsraum,
Fig. 3 in einer Seitenansicht ein drittes Ausführungsbeispiel der erfindungsgemäßen Medienversorgungsvorrichtung in einem Arbeitsraum,
Fig. 4 in einer Draufsicht ein viertes Ausführungsbeispiel der erfindungsgemäßen Medienversorgungsvorrichtung in einem Arbeitsraum,

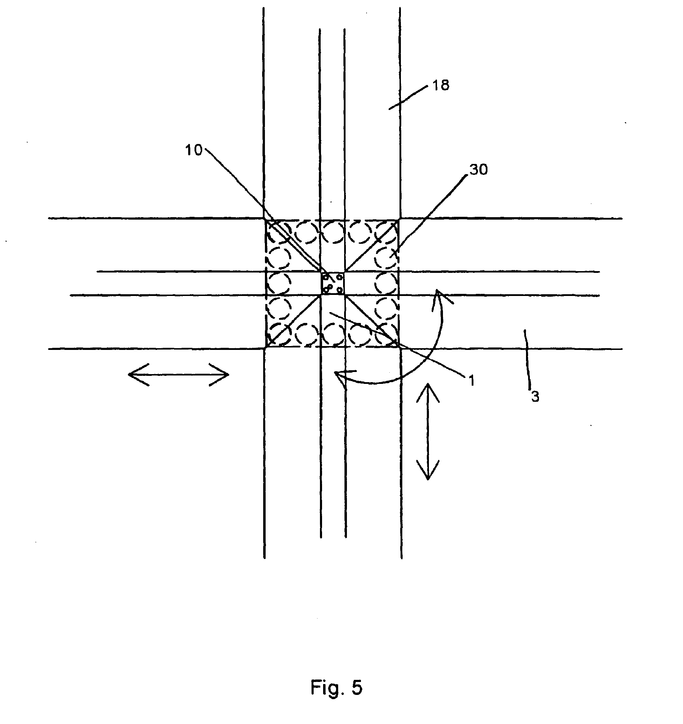

Fig. 5 eine Draufsicht auf ein Kreuzungselement eines Ausführungsbeispiels der erfindungsgemäßen Medienversorgungsvorrichtung,

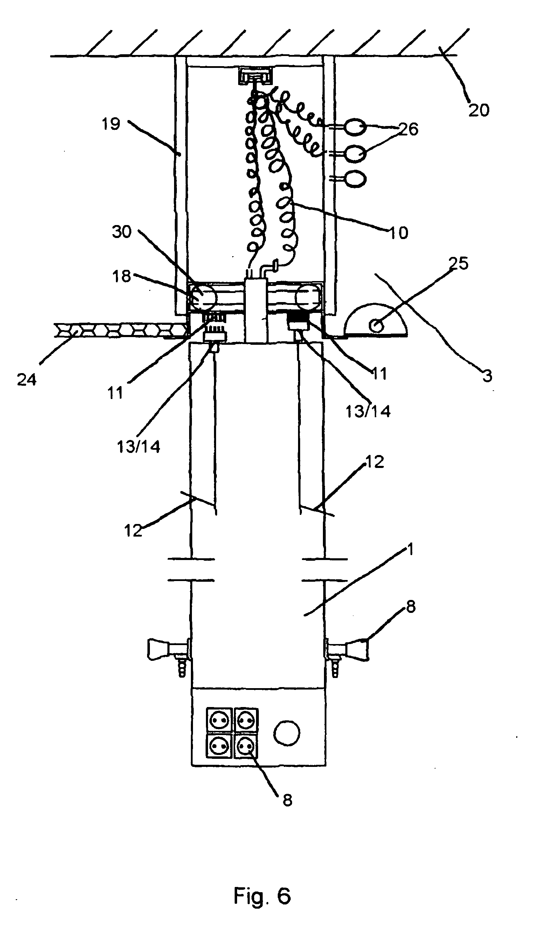

Fig. 6 eine Seitenansicht auf ein Ausführungsbeispiel eines Medienversorgungselementes,

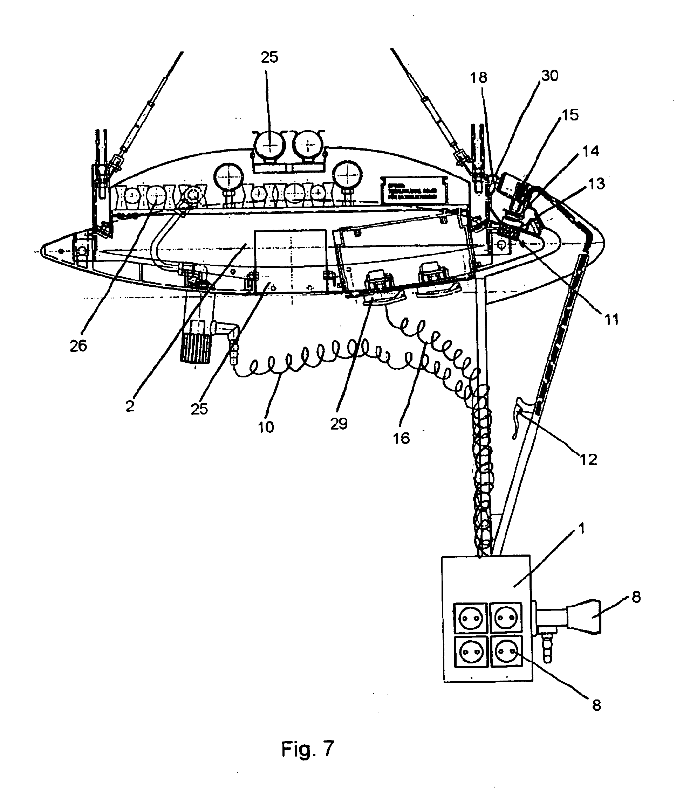

Fig. 7 eine Seitenansicht eines weiteren Ausführungsbeispiels des Medienversorgungselementes,
Fig. 8 eine Seitenansicht noch eines Ausführungsbeispiels des Medienversorgungselementes und

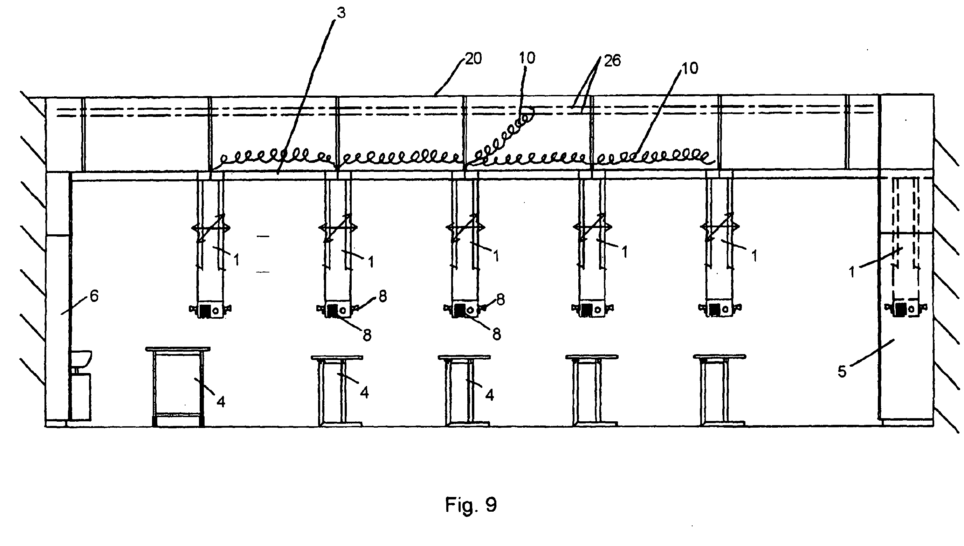

Fig. 9 eine Seitenansicht eines weiteren Ausführungsbeispiels des Medienverteilungselementes.

Wie es in der Zeichnung dargestellt ist, betrifft die Erfindung eine Medienversorgungsvorrichtung, die die an Arbeitsplätzen 4 benötigten Medien bereitstellt und zuliefert. Die Medienversorgungsvorrichtung ist mit wenigstens einem von der Raumrohdecke 20 des Arbeitsraumes abgehängten Medienverteiler 2 oder einem in eine von der Raumrohdecke 20 abgehängte Decke integrierten Medienverteiler 3 versehen. Medienversorgungselemente 1 sind horizontal verschiebbar mit dem Medienverteiler 2 oder 3 verbunden, z. B. in einer daran angebrachten Führungsschiene aufgenommen. Die Medienversorgungselemente 1 liefern die Verbrauchsmedien an die jeweiligen Arbeitsplätze 4 und zwar unabhängig davon, wie der Standort der Arbeitsplätze 4 jeweils vorbestimmt ist.

An dem Medienverteiler 2, der von der Raumrohdecke 20 abgehängt ist, können direkte Medienentnahmestellen 29 vorgesehen sein, an die flexible Medienversorgungsleitungen 10, 16 angeschlossen sind.

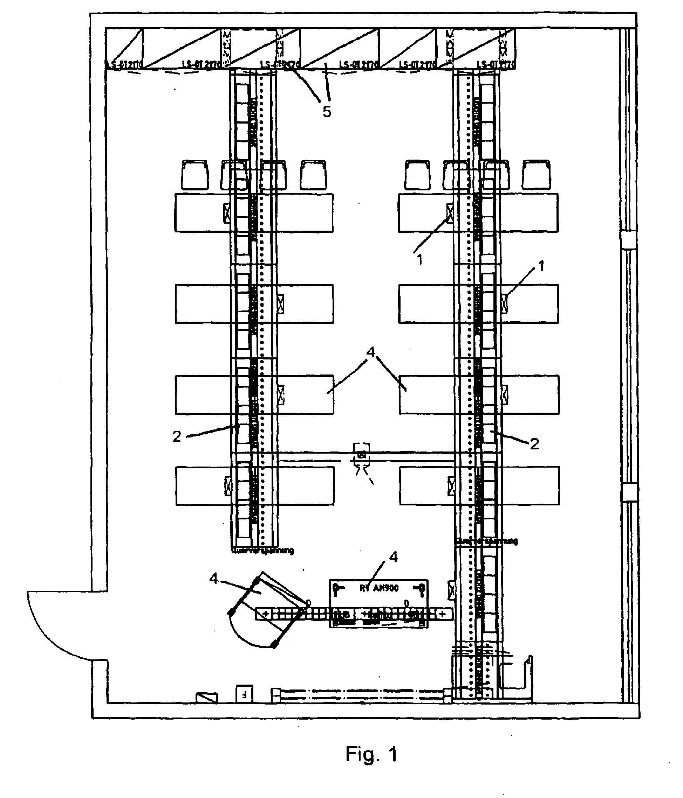

Aufgrund der horizontalen Verschiebbarkeit der Medienversorgungselemente 1 können diese in ihrer Ruhestellung beispielsweise in einem im Arbeitsraum befindlichen Schrankelement 5 verstaut werden, wie es in den Fig. 1 bis 4 dargestellt ist, und für den Gebrauch aus diesen Schrankelementen 5 herausgefahren und über den Arbeitsplätzen 4, beispielsweise Arbeitstischen, platziert werden, die je nach den Vorstellungen des Nutzers im Arbeitsraum frei gruppiert und aufgestellt sein können. Die Medienversorgungselemente 1 sind so ausgebildet, dass die Medienentnahmen oder Medienanschlüsse 8, die daran vorgesehen sind, für einen durchschnittlich gewachsenen mittelgroßen Menschen bequem erreicht werden können.

Die Medienversorgungselemente 1 können je nach Vorstellung der Nutzer mit Medienanschlüssen 8 für wässrige, gasförmige, elektrische und/oder kommunikative Medien ausgestattet sein.

Die Medienversorgung für wässrige und gasförmige Medien erfolgt über kanalartig ausgebildete Medienverteiler 2, die von der Raumrohdecke 20 abgehängt sind, oder Medienverteiler 3, die in eine abgehängte Decke integriert sind. Die Versorgungsleitungen 10, die vom Medienverteiler 2, 3 zu den Medienanschlüssen 8 der Medienversorgungselemente 1 führen und als Ringwellleitungen ausgeführt sein können, sind vorzugsweise flexible Federspiralleitungen, die die Eigenschaft haben, je nach Platzierung der Medienversorgungselemente 1 sich mehr oder weniger auseinander und wieder zusammenzuziehen. Die Grundversorgung der flexiblen Versorgungsleitungen 10 erfolgt über starre Versorgungsleitungen 26, die im Medienverteiler 2, der von der Raumrohdecke abgehängt ist und frei im Arbeitsraum angeordnet ist, oder im Medienverteiler 3 integriert sind, der in eine von der Raumrohdecke abgehängte Decke integriert ist.

Die Medienverteiler 2 können rasterartig aus Randelementen, T-Abzweigungen, Kreuzungsabzweigungen und Kurvenelementen ausgebildet und angeordnet sein.

Die elektrische Stromversorgung der Anschlüsse an den Medienversorgungselementen 1 erfolgt über Stromschienen 11, die in den Medienverteiler 2 oder den Medienverteiler 3 eingebaut sind. Hierbei kann es sich um die Führungsschienen zur Aufnahme der Medienversorgungselemente handeln. Die Abnahme der elektrischen Ströme erfolgt über eine mittels Kipphebel 12 betätigte Arretierung oder Kupplung 13, die im betätigten Zustand die Verbindung zwischen der Stromschiene 11 und dem entsprechenden Anschluss herstellt. Diese vom Kipphebel 12 betätigte Kupplung 13 ist auch gleichzeitig die Feststelleinrichtung 14 der Medienversorgungselemente 1.

Ein weiteres Ausführungsbeispiel der elektrischen Stromabnahme besteht in einer Seilzugkupplung 15, die durch Federkraft unterstützt, d. h. mit Federdruck beaufschlagt ist. Diese Variante hat den Vorteil, dass der Kupplungshebel 12 beim Verschieben der Medienversorgungselemente 1 gedrückt gehalten werden muss. Ist das Medienversorgungselement 1 in die Gebrauchsposition gebracht, wird der Kupplungshebel 12 nicht mehr betätigt und ist die Ankopplung an die Stromschiene 11 erfolgt. Gleichzeitig wird somit auch das Medienversorgungselement 1 festgestellt.

Eine weitere Variante besteht darin, flexible Federspiralleitungen 16 an Steckdosen 29 anzuschließen, die im Medienverteiler 2 oder im Medienverteiler 3 installiert sind.

Die horizontale Verschiebbarkeit der Medienversorgungselemente 1 kann mittels wenigstens einer, an den Medienversorgungselementen 1 angebrachten Rolle 30, vorzugsweise einer vierseitig befestigten Kugelrolle 30 bewirkt sein, die in einem Doppel-C-Profil 18 zwangsgeführt ist, das in den Medienverteiler 2 oder den Medienverteiler 3 integriert ist. Das Doppel-C-Profil 18, das in einen Medienverteiler 3 in einer abgehängten Decke integriert ist, ist zweiteilig ausgeführt und mittels eines U-förmigen Montagebügels 19 an der Raumrohdecke 20 befestigt. Es kann in Form vorgefertigter Kassetten ausgebildet sein, in die Akustikeinlegepanele 24 integriert sind. Es können auch Beleuchtungselemente 25 integriert sein.

Die Medienverteiler 2 sind als Einzelelemente in verschiedenen Längen mit T-Abzweigungen, Kreuzungsstücken und Kurvenstücken ausgestaltet und lassen jede mögliche Ausführungsvariante der Raumnutzung zu.

Die einzelnen Medienversorgungselemente 1 können miteinander über flexible Verbindungselemente 21 verkettet sein, so dass dann, wenn eines der Medienversorgungselemente 1 in die Gebrauchsstellung gebracht wird, weitere Medienversorgungselemente 1 in bestimmten Abständen selbsttätig folgen.

Das zweigeteilte Doppel-C-Profil 18 des Medienverteilers 3 ist so ausgebildet, dass Akustikelemente 24 und Beleuchtungseinrichtungen 25 aufgenommen werden können. Der Montagebügel 19 lässt eine Höhenjustierung des Doppel-C-Profils 18 zu. Gleichzeitig dient er zur Aufnahme von starren Versorgungsleitungen 26 sowie der flexiblen Versorgungsleitungen 10, die über um 360° drehbare Winkelelemente 27 angeschlossen sind. Das Doppel-C-Profil 18 kann auch als Stromschiene 11 ausgeführt sein.

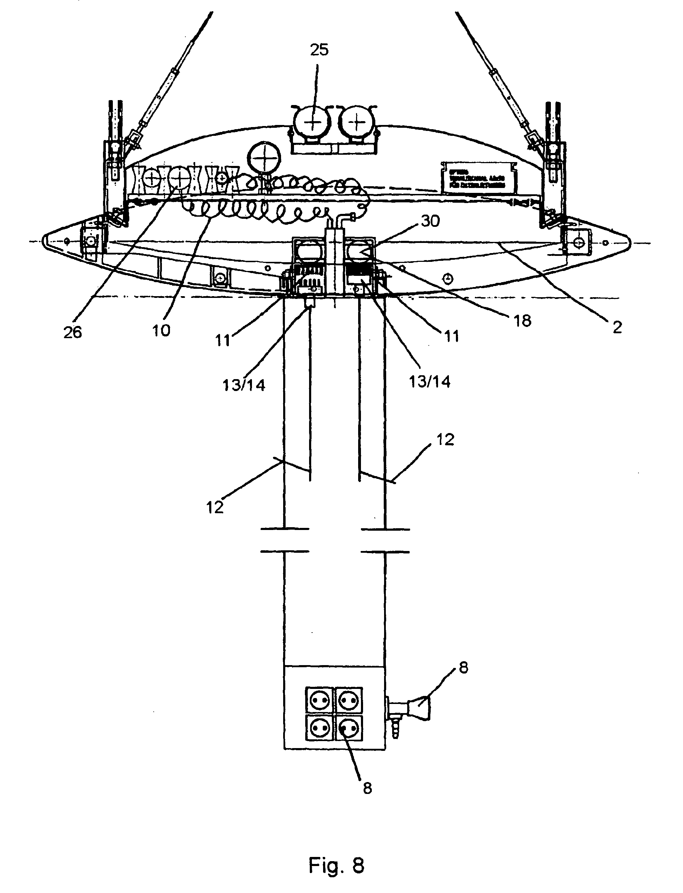

Wie es insbesondere in Fig. 8 dargestellt ist, können die Medienversorgungselemente 1 als Säulen oder quaderartige Elemente ausgeführt sein.

Wie es im Einzelnen in Fig. 1 dargestellt ist, können die Medienversorgungselemente 1 seitlich, einseitig oder zweiseitig am Medienverteiler 2 geführt sein, der im Arbeitsraum von der Raumrohdecke abgehängt angeordnet ist.

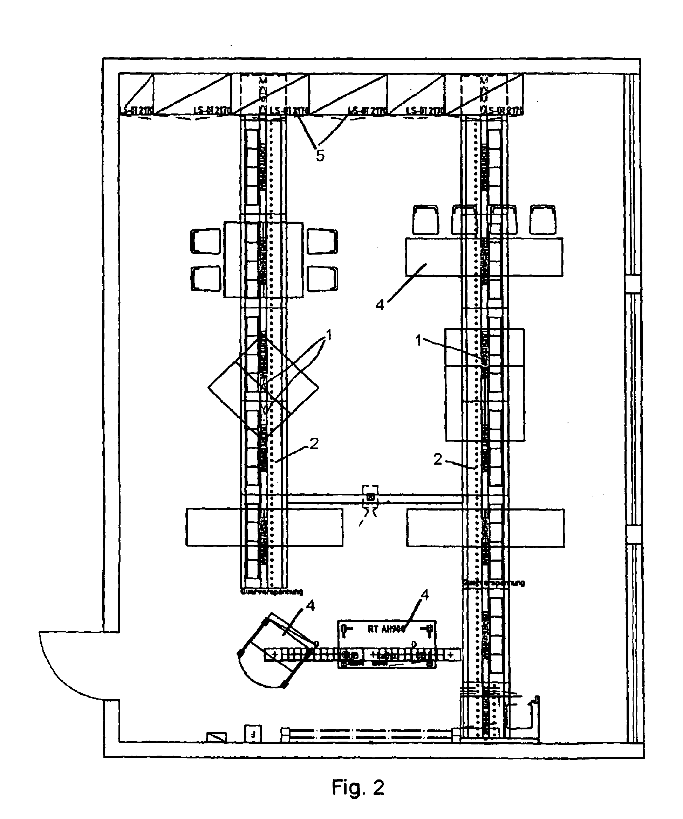

Wie es in Fig. 2 dargestellt ist, können die Medienversorgungselemente 1 aber auch mittig am Medienverteiler 2 geführt sein.

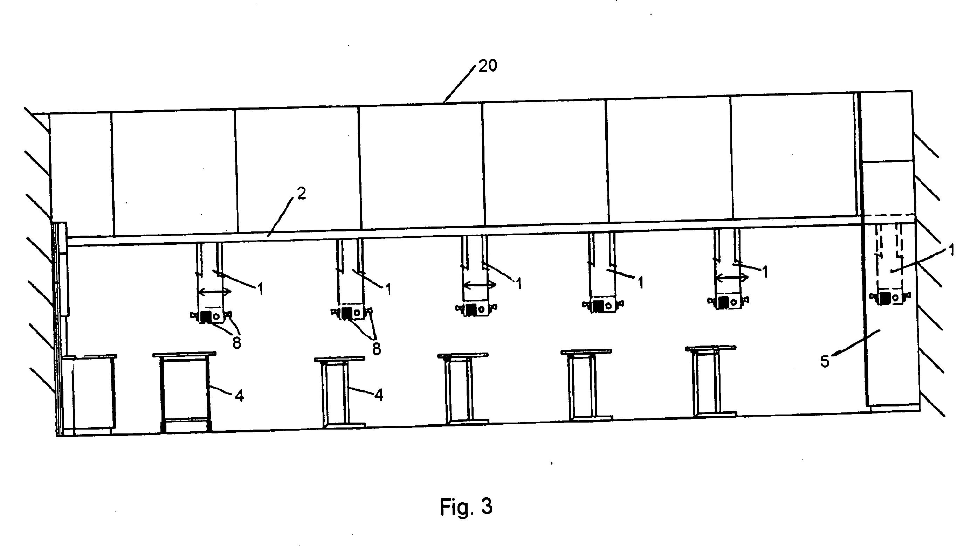

Fig. 3 zeigt eine Variante, bei der die Medienversorgungselemente 1 mittig oder seitlich am Medienverteiler 2 geführt sind, der von der Raumrohdecke 20 abgehängt angeordnet ist.

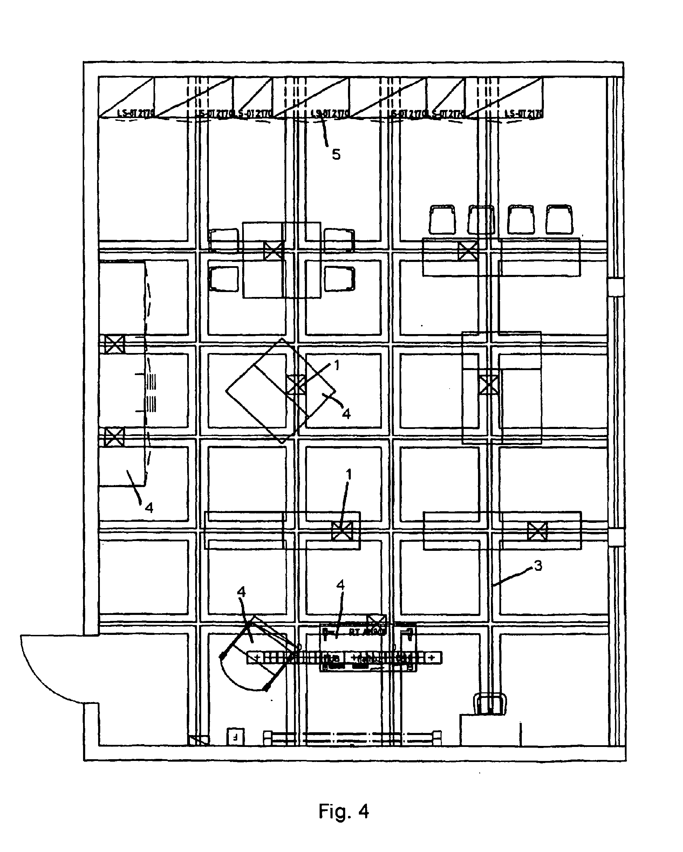

Fig. 4 zeigt ein Ausführungsbeispiel bei dem eine von der Raumrohdecke abgehängte Decke vorgesehen ist, in rasterförmige Medienverteiler 3 integriert sind, an denen die Medienversorgungselemente 1 geführt sind.

## Patentansprüche

1. Medienversorgungsvorrichtung zur Medienversorgung wenigstens eines Arbeitsplatzes in einem Arbeitsraum, mit wenigstens einem Medienverteiler (2, 3), der an der Raumrohdecke (20) anbringbar ist und mit gebäudeseitigen Medienzuführungen verbindbar ist, und mit wenigstens einem Medienversorgungselement (1) für den Arbeitsplatz, das mit dem Medienverteiler (2, 3) verbunden ist, wobei das Medienversorgungselement (1) über eine Führungsschiene horizontal verschiebbar mit dem Medienverteiler (2, 3) verbunden ist, **dadurch gekennzeichnet, dass** die Führungsschiene gleichzeitig als Stromleitungsschiene ausgebildet ist und das Medienversorgungselement (1) über eine als Feststelleinrichtung ausgebildete Arretierung (13) an der Führungsschiene feststellbar ist, wobei durch die Arretierung (13) im festgestellten Zustand eine elektrische Verbindung zwischen der Stromleitungsschiene und dem Medienversorgungselement (1) herstellbar ist.

2. Medienversorgungsvorrichtung nach Anspruch 1, **dadurch gekennzeichnet, dass** der Medienverteiler (2) aus einem von der Raumrohdecke abgehängten kanalartigen Bauteil besteht.

3. Medienversorgungsvorrichtung nach Anspruch 2, **dadurch gekennzeichnet, dass** das Medienversorgungselement (1) einseitig am Medienverteiler (2) geführt ist.

4. Medienversorgungsvorrichtung nach Anspruch 2, **dadurch gekennzeichnet, dass** das Medienversorgungselement (1) zweiseitig am Medienverteiler (2) geführt ist.

5. Medienversorgungsvorrichtung nach Anspruch 2, **dadurch gekennzeichnet, dass** das Medienversorgungselement (1) am Medienverteiler (2) mittig geführt ist.

6. Medienversorgungsvorrichtung nach Anspruch 2, **dadurch gekennzeichnet, dass** der Medienverteiler (2) aus Rasterelementen, T-Abzweigungen, Kreuzungsabzweigungen sowie Kurvenelementen gebildet ist.

7. Medienversorgungsvorrichtung nach Anspruch 2, **dadurch gekennzeichnet, dass** der als kanalartiges Bauteil ausgebildete Medienverteiler (2) die Führungsschiene zur Aufnahme des Medienversorgungselementes (1) aufweist.

8. Medienversorgungsvorrichtung nach Anspruch 7, **dadurch gekennzeichnet, dass** die Arretierung (13) zur Stromaufnahme ausgebildet ist.

9. Medienversorgungsvorrichtung nach Anspruch 1 oder 8, **dadurch gekennzeichnet, dass** die Arretierung (13), die gleichzeitig als Feststelleinrichtung (14) ausgebildet ist, mit einer Federdruckbeaufschlagung versehen ist.

10. Medienversorgungsvorrichtung nach Anspruch 1, **dadurch gekennzeichnet, dass** der Medienverteiler (3) in eine von der Raumrohdecke (20) abgehängten Decke integriert ist.

11. Medienversorgungsvorrichtung nach Anspruch 10, **dadurch gekennzeichnet, dass** das Medienversorgungselement (1) am Medienverteiler (3) in einem in der abgehängten Decke integrierten als Stromleitungsschiene ausgebildeten Profil (18) geführt ist.

12. Medienversorgungsvorrichtung nach Anspruch 11, **dadurch gekennzeichnet, dass** das Profil (18) rasterförmig im Arbeitsraum angeordnet ist.

13. Medienversorgungsvorrichtung nach Anspruch 11, **dadurch gekennzeichnet, dass** das Profil (18) zweiteilig ausgeführt ist.

14. Medienversorgungsvorrichtung nach Anspruch 11, **dadurch gekennzeichnet, dass** das Profil (18) durch einen U-förmigen Montagebügel (9) an der Raumrohdecke (20) befestigt ist.

15. Medienversorgungsvorrichtung nach Anspruch 13, **dadurch gekennzeichnet, dass** das zweiteilige Profil (18) in Form vorgefertigter Kassetten ausgebildet ist.

16. Medienversorgungsvorrichtung nach Anspruch 15, **dadurch gekennzeichnet, dass** in die Kassetten Akustikeinlegepanele integriert sind.

17. Medienversorgungsvorrichtung nach Anspruch 15 oder 16, **dadurch gekennzeichnet, dass** in die vorgefertigten Kassetten (23) Beleuchtungselemente (25) integriert sind.

18. Medienversorgungsvorrichtung nach Anspruch 14, **dadurch gekennzeichnet, dass** der Montagebügel (19) so ausgebildet ist, dass er starre Medienversorgungsleitungen (26) aufnehmen kann.

19. Medienversorgungsvorrichtung nach Anspruch 14, **dadurch gekennzeichnet, dass** der Montagebügel (19) so ausgebildet ist, dass er flexible Medienversorgungsleitungen (10) aufnehmen kann.

20. Medienversorgungsvorrichtung nach Anspruch 19, **dadurch gekennzeichnet, dass** die flexiblen Medienversorgungsleitungen (10) an den Medienversorgungselementen (1) an um 360° drehbaren Winkelelementen (27) angeschlossen sind.

21. Medienversorgungsvorrichtung nach einem der vorhergehenden Ansprüche, **dadurch gekennzeichnet, dass** das Medienversorgungselement (1) an einem Führungselement (28) am Medienverteiler (2, 3) mit wenigstens vierseitig befestigten Kugelrollen (30) angeordnet ist.

22. Medienversorgungsvorrichtung nach Anspruch 19, **dadurch gekennzeichnet, dass** die Medienversorgungsleitungen (10) als Ringwellleitungen ausgebildet sind.

23. Medienversorgungsvorrichtung nach Anspruch 2, **dadurch gekennzeichnet, dass** in den von der Raumrohdecke abgehängten kanalartigen Medienverteiler (2) eine Beleuchtungseinrichtung (25) integriert ist.

24. Medienversorgungsvorrichtung nach Anspruch 2, **dadurch gekennzeichnet, dass** an dem kanalartigen von der Decke abgehängten Medienverteiler (2) direkte Medienentnahmestellen (29) installiert sind.

25. Medienversorgungsvorrichtung nach Anspruch 24, **dadurch gekennzeichnet, dass** an den Medienentnahmestellen (29) flexible Medienzuleitungen (10, 16) des Medienversorgungselementes (1) angeschlossen sind.

26. Medienversorgungsvorrichtung nach Anspruch 14, **dadurch gekennzeichnet, dass** der U-förmige Montagebügel (9), der an der Raumrohdecke (20) befestigt ist, in der Höhe justierbar ist.

27. Medienversorgungsvorrichtung nach Anspruch 13, **dadurch gekennzeichnet, dass** das Medienversorgungselement (1) im zweigeteilten Profil (18) durch wenigstens eine Rolle (30) zwangsgeführt ist.

28. Medienversorgungsvorrichtung nach Anspruch 13, **dadurch gekennzeichnet, dass** das Medienversorgungselement (1) im zweigeteilten Profil (18) mit wenigstens einer vierseitig angebrachten Kugelrolle (30) zwangsgeführt ist.

## Claims

1. Media supply device for the supply of media to at least one workplace in a workroom, with at least one media distributor (2, 3) which can be affixed to the unfinished room ceiling (20) and can be connected to building-side media delivery systems, and with at least one media supply element (1) for the workplace, which is connected to the media distributor (2, 3), whereby the media supply element (1) is connected by means of a guide rail in a horizontally displaceable manner to the media distributor (2, 3), **characterised in that** the guide rail is designed simultaneously as a busbar and the media supply element (1) can be secured fist the guide rail by means of a locking device (13) designed as a securing device, whereby, due to the locking elements (13) in the secured state, an electrical connection can be established between the busbar and the media supply element (1).

2. Media supply device according to Claim 1, **characterised in that** the media distributor (2) consists of a component designed in channel fashion, which is suspended from the unfinished ceiling of the room.

3. Media supply device according to Claim 2, **characterised in that** the medina supple element (1) is guided on one side at the media distributor (2).

4. Media supply device according to Claim 2, **characterised in that** the media supply element (1) is guided on two sides at the media distributor (2).

5. Media supply device according to Claim 2, **characterised in that** the media supply element (1) is guided centrally at the media distributor (2).

6. Media supply device according to Claim 2, **characterised in that** the media distributor (2) is formed from frame elements, T-branches; cross-branches, and curve elements.

7. Media supply device according to Claim 2, **characterised in that** the media distributor (2), designed as a channel-like component, has the guide rail to accommodate the media supply element (1).

8. Media supply device according to Claim 7, **characterised in that** the locking element (13) is designed to accommodate electric current.

9. Media supply device according to Claim 1 or 8, **characterised in that** the locking element (13), which is designed simultaneously as a securing device (14), has spring pressure imposed upon it.

10. Media supply device according to Claim 1, **characterised in that** the media distributor (3) is integrated into a ceiling suspended from the unfinished room ceiling (20).

11. Media supply device according to Claim 10, **characterised in that** the medina supply elements (1) is guided at the media distributor in a profile (18) integrated in the suspended ceiling and designed as a busbar.

12. Media supply device according to Claim 11, **characterised in that** the profile (18) is arranged in grid-fashion in the workroom.

13. Media supply device according to Claim 11, **characterised in that** the profile (18) is designed in two parts.

14. Media supply device according to Claim 11, **characterised in that** the profile (18) is secured by a U-shaped mounting bar (9) to the unfinished roof ceiling (20).

15. Media supply device according to Claim 13, **characterised in that** the two-part element (18) is designed in the form of prefabricated cassettes.

16. Media supply device according to Claim 15, **characterised in that** acoustic inlay panels are integrated into the cassettes.

17. Media supply device according to Claim 15 or 16, **characterised in that** lighting elements (25) are integrated into the prefabricated cassettes (23).

18. Media supply device according to Claim 14, **characterised in that** the mounting bar (19) is designed in such a way that it can accommodate rigid media supply lines (26).

19. Media supply device according to Claim 14, **characterised in that** the mounting bar (19) is designed in such a way that it can accommodate flexible media supply lines (10).

20. Media supply device according to Claim 19, **characterised in that** the flexible media supply lines (10) are connected to the media supply elements (1) via angle elements (27) which can be rotated through 360°.

21. Media supply device according to one of the foregoing Claims, **characterised in that** the media supply element (1) is arranged at a guide element (28) at the media distributor (2, 3) with ball rovers (30) secured on at least four sides.

22. Media supply device according to Claim 19, **characterised in that** the media supply lines (10) are designed as ring shaft lines.

23. Media supply device according to Claim 2, **characterised in that** a lighting device (25) is integrated into the channel-type media distributor (2) suspended from the unfinished ceiling of the room.

24. Media supply device according to Claim 2, **characterised in that** direct media tapping points (29) are installed at the channel-type media distributor (2) suspended from the ceiling.

25. Media supply device according to Claim 24, **characterised in that** flexible media lines (10,16) of the media supply element (1) are connected to the media tapping points (29).

26. Media supply device according to Claim 14, **characterised in that** the U-shaped mounting bar (9), which is secured to the unfinished ceiling of the room, is height adjustable.

27. Media supply device according to Claim 13, **characterised in that** the media supply element (1) is force-guided in the two-part profile (18) by at least one roller (30).

28. Media supply device according to Claim 13, **characterised in that** the media supply element (1) is force-guided in the two-part profile (18) by at least one ball roller (30) secured on four sides.

## Revendications

1. Dispositif d'alimentation en ressources pour l'alimentation en ressources d'au moins un poste de travail dans un local de travail, comportant au moins un distributeur de ressources (2, 3) qui est propre à être monté contre un plafond brut (20) du local et est propre à être relie à des conduites d'acheminement de ressources du côté bâtiment, et comportant au moins un élément d'alimentation en ressources (1) pour le poste de travail, lequel est relié au distributeur de ressources (2, 1 3), l'élément d'alimentation en ressources (1) étant relié de manière horizontalement mobile avec le distributeur de ressources (2, 3) via un rail de guidage, **caractérisé en ce que** le rail de guidage est réalisé en même temps comme rail conducteur de courant et l'élément d'alimentation en ressources (1) est destiné à être fixé au rail de guidage par l'intermédiaire d'un dispositif d'arrêt (13) réalisé sous forme de dispositif d'immobilisation, sachant que par l'intermédiaire du dispositif d'arrêt (13) dans la position immobilisée, une liaison électrique peut être établie entre le rail conducteur de courant et l'élément d'alimentation en ressources (1).

2. Dispositif d'alimentation en ressources selon la revendication 1, **caractérisé en ce que** le distributeur de ressources (2) est formé pair un élément en forme de conduit suspendu au plafond brut du local.

3. Dispositif d'alimentation en ressources selon la revendication 2, **caractérisé en ce que** l'élément d'alimentation en ressources (1) est guidé sur un côté contre le distributeur de ressources (2).

4. Dispositif d'alimentation en ressources selon la revendication 2, **caractérisé en ce que** l'élément d'alimentation en ressources (1) est guidé des deux côtés contre le distributeur de ressources (2).

5. Dispositif d'alimentation en ressources selon la revendication 2, **caractérisé en ce que** l'élément d'alimentation en ressources (1) est guidé au milieu contre le distributeur de ressources (2).

6. Dispositif d'alimentation en ressources selon la revendication 2, **caractérisé en ce que** le distributeur de ressources (2) est formé par des éléments en réseau, des embranchements en T, des embranchements en croix, ainsi que des éléments courbes.

7. Dispositif d'alimentation en ressources selon la revendication 2, **caractérisé en ce que** le distributeur de ressources (2), réalisé sous forme d'élément en forme de conduit, comporte le rail de guidage destiné à recevoir l'élément d'alimentation en ressources (1).

8. Dispositif d'alimentation en ressources selon la revendication 7, **caractérisé en ce que** le dispositif d'arrêt (13) est réalisé pour recevoir du courant.

9. Dispositif d'alimentation en ressources selon la revendication 1 ou 8, **caractérisé en ce que** le dispositif d'arrêt (13), qui est réalisé en même temps comme dispositif d'immobilisation (14), est muni d'un système de sollicitation par la force d'un ressort.

10. Dispositif d'alimentation en ressources selon la revendication 1, **caractérisé en ce que** le distributeur de ressources (3) est intégré dans un plafond suspendu au plafond brut (20) du local.

11. Dispositif d'alimentation en ressources selon la revendication 10, **caractérisé en ce que** l'élément d'alimentation en ressources (1) est guidé contre le distributeur de ressources (3) dans un profilé (18) réalisé sous forme de rail conducteur de courant, intégré dans le plafond suspendu.

12. Dispositif d'alimentation en ressources selon à revendication 11, **caractérisé en ce que** le profilé (18) est agencé en forme de réseau dans le local de travail.

13. Dispositif d'alimentation en ressources selon la revendication 11, **caractérisé en ce que** lie profilé (18) est réalisé en deux parties.

14. Dispositif d'alimentation en ressources selon la revendication 11, **caractérisé en ce que** le profilé (18) est fixé contre le plafond brut (20) du local par l'intermédiaire d'un étrier de montage (9) en forme de U.

15. Dispositif d'alimentation en ressources selon la revendication 13, **caractérisé en ce que** le profilé (18) en deux parties est réalisé sous forme de cassettes préfabriquées.

16. Dispositif d'alimentation en ressources selon la revendication 15, **caractérisé en ce que** des panneaux acoustiques sont intégrés dans les cassettes.

17. Dispositif d'alimentation en ressources selon la revendication 15 ou 16, **caractérisé en ce que** des éléments d'éclairage (25) sont intégrés dans les cassettes (23) préfabriquées.

18. Dispositif d'alimentation et ressources selon la revendication 14, **caractérisé en ce que** l'étrier de montage (19) est réalisé de telle sorte qu'il peut recevoir des lignes d'alimentation en ressources (26) rigides.

19. Dispositif d'alimentation en ressources selon la revendication 14, **caractérise en ce que** l'étrier de montage (19) est réalisé de telle sorte qu'il peut recevoir des lignes d'alimentation en ressources (10) flexible.

20. Dispositif d'alimentation en ressources selon la revendication 19, **caractérisé en ce que** les lignes d'alimentation en ressources (10) flexibles sur les éléments d'alimentation en ressources (1) sont raccordées à des cornières (27) aptes à tourner sur 360°.

21. Dispositif d'alimentation en ressources selon l'une quelconque des revendications précédentes, **caractérisé en ce que** l'élément d'alimentation en ressources (1) est agencé contre l'élément de guidage (28) contre le distributeur de ressources (2, 3) avec au moins des roulettes (30) agencées sur quatre côtés,

22. Dispositif d'alimentation en ressources selon la revendication 19, **caractérisé en ce que** les lignes d'alimentation en ressources (10) sont réalisées sous forme de lignes à ondes annulaires.

23. Dispositif d'alimentation en ressources selon la revendication 2, **caractérisé en ce qu'**un dispositif d'éclairage (25) est intégré dans le distributeur de ressources (2) en forme de conduit suspendu au plafond brut du local.

24. Dispositif d'alimentation en ressources selon la revendication 2, **caractérisé en ce que** des points directs de prélèvement des ressources (29) sont installés sur le distributeur de ressources (2) en forme de conduit suspendu au plafond brut du local.

25. Dispositif d'alimentation en ressources selon la revendication 24, **caractérisé en ce que** des lignes d'acheminement de ressources (10, 16) flexibles de l'élément d'alimentation en ressources (1) sont raccordées aux points de prélèvement des ressources (29).

26. Dispositif d'alimentation en ressources selon la revendication 14, **caractérisé en ce que** l'étrier de montage (9) en forme de U, qui est fixé au plafond brut (20) du local, est ajustable en hauteur.

27. Dispositif d'alimentation en ressources selon la revendication 13, **caractérisé en ce que** l'élément d'alimentation en ressources (1) est monté en guidage forcé dans le profilé (18) par l'intermédiaire d'au moins une roulette (30).

28. Dispositif d'alimentation en ressources selon la revendication 13, **caractérisé en ce que** l'élément d'alimentation en ressources (1) est monté en guidage forcé dans le profilé (18) par l'intermédiaire d'au moins une roulette (30) agencée sur quatre côtés,
